(19) 

Europäisches Patentamt
European Patent Office
Office européen des brevets

(11) **EP 4 424 722 A1**

(12) **EUROPEAN PATENT APPLICATION**
published in accordance with Art. 153(4) EPC

(43) Date of publication:
**04.09.2024 Bulletin 2024/36**

(21) Application number: **22885886.6**

(22) Date of filing: **25.10.2022**

(51) International Patent Classification (IPC):
***C08F 6/04*** (2006.01)  ***C08F 6/06*** (2006.01)
***B01D 17/00*** (2006.01)

(52) Cooperative Patent Classification (CPC):
**B01D 17/00; C08F 6/04; C08F 6/06; Y02W 30/62**

(86) International application number:
**PCT/CN2022/127181**

(87) International publication number:
**WO 2023/072009 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.10.2021  CN 202111246726
26.10.2021  CN 202111247891

(71) Applicants:
• **China Petroleum & Chemical Corporation
Beijing 100728 (CN)**
• **BEIJING RESEARCH INSTITUTE OF CHEMICAL
INDUSTRY,
CHINA PETROLEUM & CHEMICAL
CORPORATION
Chaoyang District
Beijing 100013 (CN)**

(72) Inventors:
• **SONG, Wenbo
Beijing 100013 (CN)**
• **FANG, Yuanyuan
Beijing 100013 (CN)**
• **HAN, Shuliang
Beijing 100013 (CN)**
• **LYU, Jinglan
Beijing 100013 (CN)**
• **JIN, Zhao
Beijing 100013 (CN)**
• **WANG, Lusheng
Beijing 100013 (CN)**
• **WANG, Ya
Beijing 100013 (CN)**

(74) Representative: **Hoffmann Eitle
Patent- und Rechtsanwälte PartmbB
Arabellastraße 30
81925 München (DE)**

(54) **METHOD FOR PROMOTING PHASE SEPARATION OF POLYMER SOLUTION AND METHOD
FOR PREPARING OLEFIN POLYMER**

(57) The invention relates to a field of polymer preparation and discloses a method for promoting phase-separation of polymer solution. The phase-separation method of polymer solution of the invention comprises: at least a portion of the polymer solution is subjected to a heat treatment under flowing so that the polymer solution is divided into a clear liquid phase and a concentrated liquid phase, wherein the Reynolds number of the polymer solution flowing is 0.2-30. By performing the heat treatment under specific Reynolds number conditions, the invention permits to reduce the temperature of phase-separation of solution, reduce the time of phase-separation of solution, and significantly reduce the material consumption and energy consumption of the entire process, compared with the existing technology that only performs phase-separation through heat treatment.

Figure 1

**Description**

**Technical field**

The invention belongs to the field of polymer preparation and relates to a method for promoting phase-separation of polymer solution, as well as a corresponding phase-separation method of polymer solution and a method for preparing olefin polymer.

**Background Art**

Solution polymerization process occupies an important position in the polymer materials industry. This process can be used to produce a variety of products including fibers, rubber, plastic, elastomer, coatings and adhesives. However, the separation of polymers in polymer solution produced by solution polymerization is more complicated than other processes. At present, the condensation stripping operation is usually carried out by passing steam into the polymer solution to decompose and remove the catalyst residue, and then the polymer is separated; the final result is to remove the solvent, unreacted monomers, and residual small amounts of water and other volatile components, and the polymer is made into porous small particle products for subsequent drying processing, while the solvent is collected through a recovery device for recycling.

In the prior art, there are also processes that use liquid-liquid separation methods to separate polymer solution. Polymer solution can exhibit a Lower Critical Solution Temperature (LCST) phenomenon, also known as the lowest co-dissolution temperature. A homogeneous polymer solution, as the temperature increases, after reaching a certain temperature point, the polymer solution will form two liquid phases, called a clear liquid phase and a concentrated liquid phase. The concentrated liquid phase contains most of the polymer, and the clear liquid phase contains a very small amount of polymer.

CN107614541A discloses a method for continuous solution polymerization. This method can heat or cool the polymer solution to a temperature within 50°C of the critical temperature of the solvent; then the polymer solution enters a liquid-liquid separator through a pressure relief valve, and decrease or increase the pressure of the polymer solution to a pressure within 50 psig of the critical pressure to cause the polymer solution to separate into two liquid phases. There is only a very small amount of polymer in the upper poor phase, and polymer enrichment occurs in the lower concentrated phase, this reduces the energy required for subsequent solvent separation.

**Summary of the Invention**

An object of the invention is to overcome the limitations of the prior art in performing liquid-liquid phase-separation of polymer in a polymer solution as well as the defects of high energy consumption and high cost, and to provide a new method that is beneficial to promoting phase-separation of polymer solution, a phase-separation method of polymer solution and a preparation method of olefin polymer.

In order to achieve the above object, according to a first aspect of the invention, it provides a method for promoting phase-separation of polymer solution, wherein the method includes: in a phase-separation device that performs liquid-liquid phase-separation of a polymer solution into a clear liquid phase and a concentrated liquid phase, perturbation is applied to the polymer solution so that the Reynolds number anywhere in the polymer solution except the boundary layer is greater than 0.2 and less than critical Reynolds value, where the critical Reynolds value is in the range of 1-30. Accordingly, in an exemplary embodiment, the method includes subjecting at least a portion of the polymer solution to heat treatment under flow such that the polymer solution is separated into a clear liquid phase and a concentrated liquid phase, wherein the Reynolds number of the polymer solution flowing is in the range of 0.2-30.

Without being limited to any known theory, the inventor has found that making the polymer solution meet the specific Reynolds number requirements proposed by the invention will facilitate the phase-separation of the polymer solution; however, in actual operation, the specific Reynolds number requirements need to take the influences of factors into account, such as the boundary layer. The boundary layer has a well-known meaning in the art, for example, it generally refers to the presence of a fluid layer with a large velocity gradient due to the influence of the solid boundary near the interface between solid and fluid (such as the wall of a phase-separation device). The distance from the interface to the point where the flow velocity no longer changes is called the boundary layer thickness, the area beyond the boundary layer thickness is called the mainstream area, and the flow velocity in the mainstream area is called the mainstream velocity. According to the Blasius equation, the boundary layer thickness is proportional to $Re^{-1/2}$; and can therefore be specifically determined in each case by a person skilled in the art. In the invention, the point where the velocity reaches 0.99 times the mainstream velocity is used as the upper limit of the boundary layer thickness.

Accordingly, considering the influence of the boundary layer, in one embodiment of the invention, in the phase-separation device, from a macroscopic point of view, in terms of volume, at least 75%, preferably at least 85%, at least 90%, at least 95%, at least 98%, at least 99%, at least 99.5% of the polymer solution meets the specific Reynolds number requirements of the invention, or even in case where the influence of the boundary layer is small, substantially the entire polymer solution meets the specific Reynolds number requirements of the invention.

Preferably, a thermal perturbation is applied to the polymer solution by heat treatment, and/or a mechanical perturbation is applied to the polymer solution by mechanical means.

Preferably, the perturbations are applied in the phase-separation device before the polymer solution enters the phase-separation device, and/or during the feeding of the polymer solution into the phase-separation device.

Preferably, at least a portion of the polymer solution is subjected to mechanical perturbation by an action of shear force, for example, the heat treatment is performed under an action of shear force $\tau$, so that the polymer solution is divided into a clear liquid phase and a concentrated liquid phase, wherein, the shear force $\tau$ satisfies the following formula,

$$0.3*\mu^2/(D^2*\rho)<\tau<1000*\mu^2/(D^2*\rho)$$

preferably satisfies the following formula

$$5*\mu^2/(D^2*\rho)<\tau<1000*\mu^2/(D^2*\rho) \text{ (I)}$$

wherein, $\mu$ is the viscosity of the polymer solution before phase-separation, in Pa*s,
D is the diameter of the phase-separation container, in m,
$\rho$ is the density of the polymer solution before phase-separation, in kg/m$^3$.

Preferably, $\tau$ satisfies the following formula:

$$20*\mu^2/(D^2*\rho)<\tau<120*\mu^2/(D^2*\rho) \text{ (II)}.$$

Preferably, the mechanical perturbation is applied by stirring.

Preferably, the mechanical perturbation is applied during or after the thermal treatment.

Preferably, the perturbations are applied in one or more of the following ways:

performing a heat treatment before phase-separation device, and performing one or more mechanical perturbations selected from: applying a mechanical perturbation in the heat treatment device before the phase-separation device, applying a mechanical perturbation in the pipe conveying the polymer solution to the phase-separation device, applying a mechanical perturbation during the feeding process of the polymer solution into the phase-separation device, and applying a mechanical perturbation in said phase-separation device; and
performing a heat treatment in the phase-separation device and applying a mechanical perturbation in the phase-separation device.

Preferably, the entire polymer solution is heat treated under shear force.

Preferably, the heat treatment of the polymer solution is performed under stirring.

Preferably, the polymer solution is a polymer solution obtained by a solution polymerization process.

Preferably, the polymer concentration in the polymer solution is 5-20wt%, preferably 6-15wt%.

Preferably, the polymer in the polymer solution is selected from one or more of plastic, rubber and thermoplastic elastomer.

Preferably, the plastic is selected from one or more of polyethylene, polypropylene, polybutylene, copolymers of ethylene and one or more $\alpha$-olefins, and copolymers of propylene and one or more $\alpha$-olefins.

Preferably, the rubber is selected from one or more of butadiene-styrene rubber, butadiene rubber, isoprene rubber and styrene-isoprene rubber.

Preferably, the thermoplastic elastomer is selected from one or more of copolymers of ethylene and one or more $\alpha$-olefins, copolymers of propylene and one or more $\alpha$-olefins, and copolymers of ethylene and one or more cyclic olefins, copolymers of ethylene and alpha-olefins with one or more cyclic olefins, copolymers of ethylene and alpha-olefins with optionally non-conjugated dienes, butene-ethylene copolymers, styrene-butadiene-styrene block copolymers and hydrogenated styrene-butadiene-styrene block copolymers.

Preferably, the solvent in the polymer solution is selected from one or more of C5-C10 linear or branched alkanes, C5-C10 cycloalkanes and C6-C20 aromatic hydrocarbons.

Preferably, the solvent in the polymer solution is selected from one or more of n-pentane, isopentane, cyclopentane, n-hexane, isohexane, cyclohexane, methylcyclohexane, n-heptane, 2-methylheptane, n-octane, isooctane, mixed octane, benzene, toluene, o-xylene, m-xylene and p-xylene.

According to one embodiment of the invention, for the heat treatment performed in the phase-separation device, preferably, the temperature of heat treatment is in a range of the lower critical solution temperature of the polymer solution ±50°C; more preferably, the temperature of heat treatment is in the range of the lower critical solution temperature of the polymer solution -50°C.

More preferably, the polymer solution is subjected to the heat treatment under stirring in a phase-separation device.

Preferably, the temperature of heat treatment is 100-300°C, and the pressure of heat treatment is 10-50 bar.

Preferably, the polymer concentration in the clear liquid phase is less than 1wt%, and the polymer concentration in the concentrated liquid phase is 8-50wt%;

Preferably, the polymer concentration in the concentrated liquid phase is 1.35 times or more, more preferably 1.8 times or more, and further preferably 2.0 times or more the polymer concentration in the polymer solution.

According to the second aspect of the invention, it provides a phase-separation method of polymer solution, wherein the method includes the following steps:

1) a step of promoting the phase-separation of polymer solution by the method of promoting phase-separation of polymer solution according to the invention;
2) a step of separating the clear liquid phase from the concentrated liquid phase.

According to the third aspect of the invention, it provides a preparation method of an olefin polymer, wherein the method includes the following steps:

(A) a catalyst system is fed into the polymerization reactor and contacted with one or more olefin monomers and optional hydrogen to perform olefin polymerization, to obtain a polymerization reaction mixture;
(B) a phase-separation of the polymerization reaction mixture of step A is performed by the phase-separation method of polymer solution of the invention.

Compared with the prior art, the invention has the following characteristics:
by performing heat treatment under specific Reynolds number conditions, the invention permits to reduce the temperature of phase-separation of the solution and reduce the time of phase-separation of solution, compared with the existing technology that only performs the phase-separation through heat treatment, and the material and energy consumptions of the entire process are lower than those of the existing technology by about 20-40% respectively.

## Description of Figures

The figures are used to provide a further understanding of the invention and constitute a portion of the specification. Together with the following specific embodiments, the figures are used to explain the invention but do not constitute a limitation of the invention. In the figures:

Figure 1 is a schematic diagram of the spiral coil in the spiral coil heat exchanger used in Example II.1-12.
Figure 2 is a schematic diagram of the pipeline structure of the Chinese knot heat exchanger used in Example II.13-15.
Figure 3 is a schematic diagram of the internal pipe arrangement of the tubular heat exchanger used in Comparative Example II.1-2.

## Detailed Description of the Invention

The endpoints of ranges and any values disclosed herein are not limited to the precise ranges or values, but these ranges or values are to be understood to include the values approaching such ranges or values. For numerical ranges, the endpoint values of each range, the endpoint values of each range and individual point values, and the individual point values can be combined with each other to obtain one or more new numerical ranges. These numerical ranges shall be deemed to be specifically disclosed herein.

In the prior art, it is generally believed that for the purpose of phase-separation of a polymer solution, sufficient standing is one of the important conditions for phase-separation. However, after in-depth research, the inventor of the invention has found that for the separation of a polymer solution, for example, for the separation of rubber or polyolefin elastomers, applying and maintaining appropriate perturbation in the solution is more conducive to achieving phase-separation. Without being bound by any known theory, it is believed that for polymers, appropriate perturbation is beneficial for the polymer chains to fully stretch, thereby causing faster and clearer stratification. When the perturbation is too weak, there will be problems of slow stratification or poor stratification effect; when the perturbation is too strong, there will be problems of destroying the phase interface.

Accordingly, after in-depth research, on the basis that "Reynolds number" is known in the art as a dimensionless value that characterizes fluid flow conditions, the "appropriate" perturbation can be defined by the Reynolds number. Specifically, the inventor has found through data statistics that when the Reynolds number of the polymer solution is greater than 0.2, the system will transform to be more conducive to phase-separation. However, as the Reynolds number of the polymer solution continues to rise, a critical value is reached at which phase interface disruption occurs; for the purposes of this invention, this critical value is referred to as "critical Reynolds value". After more in-depth research and detailed statistics, it is believed that for the purpose of phase-separation of polymer solution, especially for a plastic selected from polyethylene, polypropylene, polybutylene, copolymers of ethylene with one or more alpha-olefins, and copolymers of propylene with one or more alpha-olefins, a rubber selected from the group consisting of butadiene-styrene rubber, butadiene rubber, isoprene rubber and styrene-isoprene rubber, and a thermoplastic elastomer selected from copolymers of ethylene and one or more $\alpha$-olefins, copolymers of propylene and one or more $\alpha$-olefins, copolymers of ethylene and one or more cyclic olefins, copolymers of ethylene and $\alpha$-olefins with one or more cyclic olefins, copolymers of ethylene and alpha-olefins with optionally non-conjugated dienes, butene-ethylene copolymers, styrene-butadiene-styrene block copolymers and hydrogenated styrenes- butadiene-styrene block copolymers, such as ethylene-propylene rubber (EPR), polybutadiene rubber (PB), propylene-based elastomer (PBE) or polyolefin elastomer (POE), it is believed that the critical Reynolds value is in a range of 1-30.

Thus, the invention provides a method for promoting phase-separation of a polymer solution, wherein the method includes: in a phase-separation device that causes the polymer solution to undergo liquid-liquid phase-separation into a clear liquid phase and a concentrated liquid phase, the perturbation is applied such that the Reynolds number anywhere in the polymer solution is greater than 0.2 and less than critical Reynolds value, where the critical Reynolds value is in a range of 1-30. Accordingly, in an exemplary embodiment, the method includes subjecting at least a portion of the polymer solution to heat treatment under flow such that the polymer solution is separated into a clear liquid phase and a concentrated liquid phase, wherein the Reynolds number of the polymer solution flowing is between 0.2-30.

According to one embodiment of the invention, the Reynolds number anywhere in the polymer solution is greater than 0.5, or greater than 1 by applying perturbation. According to one embodiment of the invention, the critical Reynolds value is less than or equal to 20, or less than or equal to 10.

According to one embodiment of the invention, the thermal perturbation is applied to the polymer solution by heat treatment, and/or the mechanical perturbation is applied to the polymer solution by mechanical means.

According to one embodiment of the invention, the perturbation is applied in the phase-separation device, the perturbation is applied before the polymer solution enters the phase-separation device, and/or the perturbation is applied during the feeding of the polymer solution into the phase-separation device.

According to one embodiment of the invention, no pressure reduction step is included before the polymer solution enters the phase-separation device, and the polymer solution does not experience significant pressure reduction in the phase-separation device, for example the pressure of the polymer solution in the phase-separation device does not deduce or deduces by no more than 20%, preferably no more than 10%; and in some cases, the polymer solution of the invention may, as appropriate, undergo an appropriate pressure increase before entering the phase separation device and/or in the phase separation device, as long as it still meets the requirements of the invention, in particular the requirements with respect to the Reynold number and critical Reynolds number. Preferably, the pressure of the polymer solution in the phase-separation device in steady state is reduced by no more than 20% compared to the pressure at the outlet of the reactor used for the polymerization reaction of the polymer solution. For example, the pressure of the polymer solution in the phase-separation device in steady state may be substantially equal to the pressure at the outlet of the reactor used for the polymerization of the polymer solution.

In the invention, the method for phase separating a portion of the polymer solution may, for example, apply shear force to the polymer solution, so that the Reynolds number of the polymer solution flowing is between 0.2 and 30.

Preferably, the Reynolds number of the polymer solution flowing is in a range of 0.2-30. Specific examples of the Reynolds number of the polymer solution flowing include: 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0 etc.

For the invention, it is preferred to apply a thermal perturbation to the polymer solution, for example by heat treatment. On the basis of thermal perturbation, the invention preferably further applies a mechanical perturbation to the polymer solution. According to one embodiment of the invention, a mechanical perturbation is carried out during or after the heat treatment. Accordingly, it is desirable for the invention that in one embodiment no mechanical perturbation is carried out prior to the heat treatment.

Thus, the implementation of mechanical perturbation during the heat treatment can be carried out as follows:

- performing the heat treatment in phase-separation device and applying the mechanical perturbation in said phase-separation device; and

For the invention, the mechanical perturbation after heat treatment can be carried out as follows:

- performing the heat treatment before phase-separation and performing one or more mechanical perturbations selected from: applying a mechanical perturbation in the heat treatment device before the phase-separation device, applying a mechanical perturbation in the pipes conveying the polymer solution to the phase-separation device, applying a mechanical perturbation during the feeding of the polymer solution into the phase-separation device and applying a mechanical perturbation in the phase-separation device.

For an embodiment in which the mechanical perturbation is applied after heat treatment, various mechanical perturbations exemplified above can be combined with each other. For example, for the purpose of the invention, the perturbations can be implemented in one or more of the following ways:

(1) performing a heat treatment before phase-separation device, and applying a mechanical perturbation in the pipeline that conveys the polymer solution to the phase-separation device;
(2) performing a heat treatment before phase-separation device, and applying a mechanical perturbation during the feeding of the polymer solution into the phase-separation device;
(3) performing a heat treatment before phase-separation device, and applying a mechanical perturbation in the phase-separation device;
(4) performing a heat treatment before phase-separation device, applying a mechanical perturbation during the feeding of the polymer solution into the phase-separation device, and applying a mechanical perturbation in the phase-separation device;
(5) performing a heat treatment before phase-separation device, and applying a mechanical perturbation in a equipment performing the heat treatment before phase-separation device.

According to one embodiment of the invention, the heat treatment before phase-separation device is carried out by means of a heat exchanger and/or by applying jacket-heating to the pipes connected to the phase-separation device. For the purpose of the invention, various heat treatment means before phase-separation device can be combined and implemented as appropriate.

According to one embodiment of the invention, mechanical perturbation is applied during the feeding of the polymer solution into the phase-separation device by feeding the polymer solution through a nozzle or distributor. For the purpose of the invention, various mechanical perturbations applied during the feeding process of the phase-separation device can be implemented in combination as appropriate.

According to one embodiment of the invention, the heat treatment in phase-separation device is carried out by jacket heating and/or built-in heating coils. For the purpose of the invention, various heat treatment means in the phase-separation device can be combined and implemented as appropriate.

According to one embodiment of the invention, the mechanical perturbation is applied in the phase-separation device by applying stirring, providing baffles or other fixed components. For the purpose of the invention, the various means of applying mechanical perturbation in the phase-separation device may be combined as appropriate.

According to one embodiment of the invention, the mechanical perturbation is applied by arranging components such as coils/Chinese knots in the device for performing the heat treatment before phase-separation device. For the purpose of the invention, the various means of applying mechanical perturbation in the device for performing the heat treatment before phase-separation device may be combined and implemented as appropriate.

For the purpose of the invention, the various heat treatment means before the phase-separation device, the various mechanical perturbations applied during the feeding of the phase-separation device, the various heat treatment means in the phase-separation device, the various mechanical perturbations applied in the phase-separation device and the means of applying various mechanical perturbations in an equipment for performing the heat treatment before phase-separation device may be combined and implemented as appropriate, as long as the mechanical perturbation is applied during or after the heat treatment, so that in the phase-separation device, the Reynolds number anywhere in the polymer solution is greater than 0.2 and less than the critical Reynolds value, wherein the critical Reynolds value is in a range of 1-30.

In an exemplary embodiment, the heat treatment in phase-separation device is performed and the mechanical perturbation is applied in the phase-separation device. Preferably, at least a portion of the polymer solution is mechanically disturbed by the action of shear force $\tau$, for example the heat treatment is performed under the action of the specific shear force of the invention, so that the polymer solution is divided into a clear liquid phase and a concentrated liquid phase, where the shear force $\tau$ satisfies the following formula,

$$0.3*\mu^2/(D^2*\rho)<\tau<1000*\mu^2/(D^2*\rho)$$

preferably satisfies the following formula

$$5*\mu^2/(D^2*\rho)<\tau<1000*\mu^2/(D^2*\rho) \ (I)$$

wherein, $\mu$ is the viscosity of the polymer solution before phase-separation, in Pa*s,
D is the diameter of the phase-separation container, in m,
$\rho$ is the density of the polymer solution before phase-separation, in kg/m$^3$.

According to the invention, by performing the heat treatment under the action of shearing force, compared with the existing technology that only performs phase-separation through heat treatment, the temperature of phase-separation of solution is reduced, the time of phase-separation of solution is reduced, and both the material consumption and the energy consumption can be significantly reduced.

From the perspective of further reducing phase-separation time, material consumption and energy consumption, preferably, $\tau$ satisfies the following formula: $1*\mu^2/(D^2*\rho)<\tau<800*\mu^2/(D^2*\rho)$; more preferably, $\tau$ satisfies the following formula: $5*\mu^2/(D^2*\rho)<\tau<600*\mu^2/(D^2*\rho)$; more preferably, $\tau$ satisfies the following formula: $10*\mu^2/(D^2*\rho)<\tau<400*\mu^2/(D^2*\rho)$; more preferably, $\tau$ satisfies the following formula: $15*\mu^2/(D^2*\rho)<\tau<200*\mu^2/(D^2*\rho)$; more preferably, $\tau$ satisfies the following formula: $20*\mu^2/(D^2*\rho)<\tau<120*\mu^2/(D^2*\rho)$.

According to the invention, at least a portion of the polymer solution is subjected to heat treatment under the action of the specific shear force of the invention, preferably, the entire polymer solution is subjected to the heat treatment under the action of the specific shear force. That is to say, a portion of the polymer solution can be heat treated under the action the specific shear force of the invention, or also the entire polymer solution can be heat treated under the action of the specific shear force of the invention. By subjecting the entire polymer solution to heat treatment under the action of shear force, the time of phase-separation can be further reduced, and the material consumption and the energy consumption can be further reduced.

According to the invention, the shear force satisfies the above formula. When the shear force is below $0.3*\mu^2/(D^2*\rho)$, there is a problem that the polymer chain cannot fully stretch due to insufficient perturbation, resulting in slow delamination or poor delamination effect; in addition, when the shear force is above $1000*\mu^2/(D^2*\rho)$, there is a problem that the phase interface is destroyed due to too strong perturbation.

According to the invention, the shearing force can be achieved by equipment generally capable of generating shearing force in the art, preferably by a stirrer. That is to say, it is preferred that the heat treatment of the polymer solution is carried out under stirring. The stirrer can be any form of stirrer, preferably one or more of a paddle stirrer, an anchor stirrer, helical ribbon agitator and a gate stirrer. One or more stirrers may be used.

In addition, the stirrer can be inserted into the phase-separation container in a center top-plug-in type, an eccentric top-plug-in type, a bottom plug-in type, a side plug-in type, an oblique plug-in type, etc. In addition, the sealing form of the stirrer can include: mechanical sealing, packing sealing, magnetic sealing, etc.

In a preferred embodiment of the invention, in order to enhance the stirring effect, one or more baffles or guide tubes can be placed in the phase-separation container.

In another exemplary embodiment, a heat treatment before phase-separation device is performed, and a mechanical perturbation is applied in the device for performing the heat treatment before phase-separation device, so that the polymer solution is kept in a disturbed and heated state during the feeding it into the phase-separation tank. Preferably, for example, the polymer solution can be conveyed to a heat exchanger with heating function and capable of disturbing the polymer solution flowing to perform the heat treatment before phase-separation device, and then sent to a phase-separation tank for the phase-separation.

As the above-mentioned heat exchanger, it is preferable that the pipes of the polymer solution flowing path in the heat exchanger are provided with protrusions that can disturb the liquid flowing. Such protrusions can be in the shape of rods, plates, disks, columns, etc., such as breaking rods, baffles, etc., and can be fixed in the pipe fittings at any angle and in any way.

In addition, as the above-mentioned heat exchanger, a Chinese knot heat exchanger and/or a spiral coil heat exchanger having a complex structure in the heat exchanger can also be used. By using the Chinese knot heat exchanger and/or the spiral coil heat exchanger, the polymer solution can be in fully disturbed and heated state during the feeding of it into the phase-separation tank, so that the time of phase-separation of solution can be reduced and the material and energy consumptions of the entire process can be reduced.

According to one embodiment of the invention, the heat exchanger with heating function is a Chinese knot heat exchanger with "Chinese knot" type pipe fittings, in which the polymer solution passes through the "shell" layer, and the heat medium such as steam or hot oil passes through the "pipe" layer.

The Chinese knot heat exchanger with "Chinese knot" type pipe fittings refers to the following: the inner pipe of the heat exchanger are bent and folded into multiple Chinese knots in a Chinese knot manner in the shell, the angle of the pipe at the bend can be appropriately selected, for example, it can be 45 degrees or 135 degrees.

Preferably, the inner pipe of the Chinese knot heat exchanger is bent and folded into multiple Chinese knots, more preferably 1 to 5 Chinese knots, and further preferably 2 to 3 Chinese knots.

Examples of the number of Chinese knots can include: 1, 2, 3, 4, 5, etc.

According to one embodiment of the invention, a heat exchanger with heating function is a spiral coil heat exchanger with spiral disk pipe fittings, in which the polymer solution passes through the "shell" layer, and the heat medium such as steam or hot oil passes through the "pipe" layer.

Preferably, the pipes in the spiral coil heat exchanger are bent in a spiral manner to form multiple spirals, more preferably 3-20 spirals, more preferably 4-15 spirals, and further preferably 5-10 spirals.

Examples of the number of spirals can include: 3, 4, 5, 6, 7, 8, 9, 10, 11, 12, 13, 14, 15, 16, 17, 18, 19, 20, etc.

The heat treatment before phase-separation device permits the temperature of the polymer solution when being sent into the phase-separation tank to be the temperature of phase-separation; the temperature of phase-separation can be, for example, in a range of the lower critical solution temperature of the polymer solution $\pm 50°C$; more preferably, the temperature of phase-separation is in a range of the lower critical solution temperature of the polymer solution $\pm 30°C$; further preferably, the temperature of phase-separation is in a range of the lower critical temperature of the polymer solution $\pm 20°C$.

Specifically, the heat treatment permits the temperature of the polymer solution when being fed into the phase-separation tank to be 100-300°C, preferably 110-250°C, and more preferably 120-200°C.

According to the invention, the polymer solution can be various polymer solutions commonly used in the art for heat treatment phase-separation, for example, the polymer solution can be a polymer solution obtained by a solution polymerization process, such as homogeneous liquid polymerization system contained in a reactor; it can also be a polymer solution obtained by dissolving a polymer in a liquid, such as an inert solvent or one or more monomers or their blends, preferably, it is a polymer solution obtained by a solution polymerization process.

According to the invention, the solution polymerization process is a "polymerization reaction carried out in a solution state by dissolving monomers in an appropriate solvent and adding an initiator (or catalyst)" commonly used in the art; as the catalyst, for example, Ziegler-Natta catalysts, transition metal single-site or multi-sites catalysts, rare earth metal catalysts, etc. can be used. The catalyst can be dissolved in the solvent or suspended in the solvent. In some embodiments, the catalysts can be used in conjunction with electron donors. In other embodiments, the catalyst needs to be used in conjunction with a cocatalyst such as a boron-containing compound and/or an aluminum alkyl and/or a methylaluminoxane.

According to the invention, the solution polymerization temperature can vary within a wide range, preferably between 45°C and 200°C. The solution polymerization pressure can vary within a wide range, preferably between 0.5 and 15Mpa. The solution polymerization process can be in batch, also can be semi-continuous or continuous.

According to the invention, the polymer concentration in the polymer solution can vary within a wider range, preferably, the polymer concentration in the polymer solution is 5-20 wt%; more preferably, the polymer concentration in the polymer solution is 6-15wt%.

According to the invention, preferably, the polymer in the polymer solution is selected from one or more of plastic, rubber and thermoplastic elastomer.

The plastic may be selected from for example one or more of polyethylene, polypropylene, polybutylene, copolymers of ethylene and one or more $\alpha$-olefins, and copolymers of propylene and one or more $\alpha$-olefins.

The rubber may be selected from for example one or more of butadiene-styrene rubber, butadiene rubber, isoprene rubber and styrene-isoprene rubber.

The thermoplastic elastomer may be selected from for example one or more of ethylene and one or more $\alpha$-olefins, copolymers of propylene and one or more $\alpha$-olefins, copolymers of ethylene and one or more cyclic olefins, copolymers of ethylene and alpha-olefins with one or more cyclic olefins, copolymers of ethylene and alpha-olefins with optionally non-conjugated dienes, butene-ethylene copolymers, styrene-butadiene-styrene block copolymers and hydrogenated styrene-butadiene-styrene block copolymers.

The copolymer of ethylene and one or more $\alpha$-olefins refers to an ethylene-based copolymer, which has a density in a range of about 0.85-0.915 g/cm$^3$ (determined according to ASTM D4703 method B and ASTM D1505). The ethylene-based copolymers described herein are copolymers containing at least about 50% by weight of ethylene-derived units and higher alpha-olefin-derived units such as propylene, 1-butene, 1-hexene, and 1-octene.

The copolymer of propylene and one or more α-olefins refers to a propylene-based copolymer. The propylene-based copolymers described herein are copolymers containing at least about 50 wt% propylene-derived units and ethylene-derived units, or are copolymers containing at least about 50 wt% propylene-derived units and higher alpha-olefin-derived units (such as 1-butene, 1-hexene and 1-octene).

In a preferred embodiment of the invention, the copolymer of ethylene and one or more α-olefins is EPR, ethylene-1-butene copolymer elastomer or ethylene-1-octene copolymer elastomer.

According to the invention, preferably, the solvent in the polymer solution is selected from one or more of C5-C10 linear or branched alkane, C5-C10 cycloalkanes, and C6-C20 aromatic hydrocarbons; more preferably, the solvent in the polymer solution is selected from one or more of n-pentane, isopentane, cyclopentane, n-hexane, isohexane, cyclohexane, methylcyclohexane, n-heptane, 2-methylheptane, n-octane, isooctane, mixed octane, benzene, toluene, o-xylene, m-xylene and p-xylene

In some preferred embodiments of the invention, a metallocene catalyst and a boron-containing compound and/or a methylaluminoxane compound are used as a catalyst system, optionally an alkyl aluminum is used as a scavenger, the solution polymerization is carried out in an alkane such as isopentane, n-pentane, n-hexane, cyclohexane and isohexane, and the prepared polymers are polymer solutions of ethylene-α-olefin copolymers, propylene-α-olefin copolymers, copolymer of ethylene-propylene and optional non-conjugated diene. In a more preferred embodiment, a metallocene catalyst and a boron-containing compound are used as a catalyst system, and an alkyl aluminum is used as a scavenger, the solution polymerization is carried out in an alkane such as isopentane, n-pentane or n-hexane, the prepared polymer is a polymer solution of ethylene-α-olefin copolymer. In other more preferred embodiments, a metallocene catalyst and a boron-containing compound are used as a catalyst system, alkyl aluminum is used as scavenger, and the solution polymerization is carried out in an alkane such as isopentane, n-pentane or n-hexane, and the prepared polymer is a polymer solution of propylene-α-olefin copolymer.

In some preferred embodiments, a non-metallocene catalyst and a boron-containing compound and/or a methylaluminoxane compound are used as catalyst system, optionally alkyl aluminum as scavenger, a solution polymerization is carried out in alkanes such as isopentane, n-pentane, n-hexane, cyclohexane, and isohexane, and the prepared polymer is a polymer solution of ethylene-α-olefin copolymers, propylene-α-olefin copolymers, and copolymers of ethylene-propylene and optional non-conjugated diene. In a more preferred embodiment, a non-metallocene catalyst, a boron-containing compound and methylaluminoxane are used as catalyst system, and a solution polymerization is carried out in alkanes such as isopentane, n-pentane, and n-hexane, the prepared polymer is a polymer solution of a copolymer of ethylene-propylene and non-conjugated diene.

In a specific embodiment of the invention, the polymer in the polymer solution is polyolefin elastomer, and the solvent in the polymer solution is a mixture of cyclohexane and n-hexane.

In another specific embodiment of the invention, the polymer in the polymer solution is a polyolefin elastomer, and the solvent in the polymer solution is a mixture of cyclohexane and n-hexane.

In another specific embodiment of the invention, the polymer in the polymer solution is polyolefin elastomer, and the solvent in the polymer solution is n-pentane.

In another specific embodiment of the invention, the polymer in the polymer solution is polyolefin elastomer, and the solvent in the polymer solution is isopentane.

In another specific embodiment of the invention, the polymer in the polymer solution is a propylene-based elastomer, and the solvent in the polymer solution is n-pentane.

In another specific embodiment of the invention, the polymer in the polymer solution is a propylene-based elastomer, and the solvent in the polymer solution is isopentane.

In another specific embodiment of the invention, the polymer in the polymer solution is polybutadiene rubber, and the solvent in the polymer solution is a mixture of cyclohexane and n-hexane.

In another specific embodiment of the invention, the polymer in the polymer solution is ethylene propylene rubber, and the solvent in the polymer solution is a mixture of cyclohexane and n-hexane.

According to the embodiment of the invention in which a heat treatment in a phase-separation device is performed and a mechanical perturbation is applied in the phase-separation device, the temperature of heat treatment may be in the range of the lower critical solution temperature of the polymer solution ±50°C; preferably, the temperature of heat treatment is in the range of the lower critical solution temperature of the polymer solution -50°C.

In the invention, by performing heat treatment under the action of shear force, compared with the existing technology of performing the phase-separation only by heat treatment, the temperature of phase-separation of the solution is reduced; therefore, in the invention, the heat treatment may be performed at a temperature below the lower critical solution temperature of the polymer solution, and the time of phase-separation of the polymer solution can be reduced and the material and energy consumptions can be reduced.

The temperature of heat treatment may be, for example: in the range of the lower critical solution temperature of the polymer solution ±50°C; preferably, the temperature of heat treatment is: in the range of the lower critical solution temperature of the polymer solution -50°C; more preferably, the temperature of heat treatment is: in the range of the lower critical solution temperature of the polymer solution -30°C; further preferably, the temperature of heat treatment is: in the range of the lower critical solution temperature of the polymer solution -20°C.

For the purpose of the invention, "the range of the lower critical solution temperature of the polymer solution ±50°C" refers to: from the lower critical solution temperature of the polymer solution -50°C to the lower critical solution temperature of the polymer solution +50°C; "the range of the lower critical solution temperature of the polymer solution - 50°C" refers to: from the lower critical solution temperature of the polymer solution -50°C to the lower critical solution temperature of the polymer solution; "the range of the lower critical solution temperature of the polymer solution -30°C" refers to: from the lower critical solution temperature of the polymer solution -30°C to the lower critical solution temperature of the polymer solution; "the range of the lower critical solution temperature of the polymer solution -20°C" refers to: from the lower critical solution temperature of the polymer solution -20°C to the lower critical solution temperature of the polymer solution. Since the types of specific polymer solutions are different, the lower critical solution temperatures of the specific polymer solutions are also different. Therefore, the ranges of different types of polymer solutions are also different.

The "lower critical solution temperature of the polymer solution" is well known in the art, and can be determined for example by turbidity method. For details, see "Macromolecular Solution", written by Wu Qi, Higher Education Press, 2021, pp. 424-431 (《大分子溶液》，吴奇著，高等教育出版社, 2021 年, 第 424~431 页).

According to the embodiment of the invention in which the heat treatment in phase-separation device is performed and the mechanical perturbation is applied in the phase-separation device, the heat treatment in phase-separation device can be carried out in a container that is generally capable of performing heat treatment phase-separation in the art, for example, the phase-separation container can be any closed container that can withstand high temperature and high pressure, such as vertical container, horizontal container, rectangular container, etc., and the form of header can be flat header, elliptical header, cone bottom, etc., and can be equipped with a jacket that passes a heating media such as thermal oil or steam, or it can be without a jacket.

According to the embodiment as mentioned above, the temperature and pressure heat treatment in the phase-separation device can be selected according to the lower critical solution temperature of the polymer solution, but generally, the temperature of heat treatment can be 100-300°C, the heat treatment pressure is 2-50bar. In addition, the temperature of heat treatment is more preferably 120-280°C, further preferably 120-180°C; the pressure of heat treatment is more preferably 3-20bar, further preferably 3-10bar.

According to this embodiment, preferably, after performing the phase-separation by the invention, the polymer concentration in the clear liquid phase is less than 1 wt%, and the polymer concentration in the concentrated liquid phase is 8-50 wt%.

Specifically, the polymer concentration in the concentrated liquid phase is above 1.35 times, more preferably above 1.8 times, and further preferably above 2.0 times the polymer concentration in the polymer solution; in addition, preferably it is below 10 times, more preferably below 5 times, still more preferably below 4 times, and still more preferably below 3.5 times the polymer concentration in the polymer solution.

According to the embodiment of the invention that performs the heat treatment before phase-separation device and applies the mechanical perturbation in the device for performing the heat treatment before phase-separation device, the temperature of phase-separation and pressure may be selected according to the lower critical solution temperature of the polymer solution, but usually, the temperature of phase-separation can be 100-300°C, and the pressure of phase-separation is 2-50bar. In addition, the temperature of phase-separation is more preferably 120-280°C, further preferably 120-180°C; the pressure of phase-separation is more preferably 3-20 bar, further preferably 3-10 bar. In addition, the time of phase-separation is preferably within 60 minutes, more preferably 5-45 minutes, further preferably 7-30 minutes.

According to this embodiment, preferably, after performing phase-separation by the invention, the polymer concentration in the clear liquid phase is less than 1wt%, more preferably less than 0.5wt%, and the polymer concentration in the concentrated liquid phase is 10wt%, preferably above 15wt%, more preferably above 18wt%, still more preferably 25-50wt%.

The invention also provides a phase-separation method of polymer solution, wherein the method includes the following steps:

1) a step of promoting the phase-separation of polymer solution by using the method of promoting phase-separation of polymer solution according to the invention;

2) a step of separating the clear liquid phase from the concentrated liquid phase.

According to the invention, there is no particular limitation on the separation method, various methods commonly used in the art to separate the clear liquid phase from the concentrated liquid phase can be adopted, and will not be described in detail herein.

According to yet another aspect of the invention, it provides a preparation method of an olefin polymer, wherein the method includes the following steps:

(A) a catalyst system is fed into the polymerization reactor and contacted with one or more olefin monomers and optional hydrogen to perform olefin polymerization, to obtain a polymerization reaction mixture;
(B) the polymerization reaction mixture of step A is phase-separated by employing the phase-separation method of polymer solution of the invention.

According to the preparation method of the invention, the method further includes the following step: the concentrated liquid phase is recovered from the phase-separation solution obtained in step B, and the concentrated liquid phase is devolatilized to obtain a polymer.

The main improvements of the preparation method of olefin polymer of the invention lie in performing the phase-separation of the polymerization reaction mixture obtained by the polymerization reaction; as for the monomers, solvents, post-treatment methods and conditions used in the polymerization, various monomers, solvents, post-treatment methods and conditions commonly used in this field can be used.

For example, olefin monomers can be ethylene, propylene, butylene, pentene, octene, butadiene, isoprene, styrene, and the like.

In a preferred embodiment of the invention, step A includes feeding the catalyst system to a polymerization reactor, contacting it with one or more olefinic ethylene and/or propylene monomers, optionally one or more comonomers, and optionally hydrogen to conduct the polymerization of the olefins, to obtain a polymerization mixture.

Examples of the above-mentioned comonomers include 1-butene, 1-hexene, 1-octene, and the like.

Examples of the above-mentioned olefin polymers include one or more of the above-mentioned plastic, rubber, and thermoplastic elastomer.

According to the invention, by performing the heat treatment under specific Reynolds number conditions, the temperature of phase-separation of solution is reduced, the time of phase-separation of solution is reduced, compared with the existing technology that only performs phase-separation through heat treatment; and the material consumption and energy consumption of the entire process can be reduced by about 20-40% respectively compared with the existing technology.

## Example

The invention will be described in detail through the following examples, but the invention is not limited to the following examples.

Unless otherwise specified, the operations and treatment methods involved in the invention belong to conventional methods in the art.

Unless otherwise specified, the instruments used in the invention are conventional instruments in the art.

Unless otherwise specified, all raw materials used are commercially available.

In the examples and comparative examples, ethylene-propylene rubber (EPR), polybutadiene rubber (PB), propylene-based elastomer (PBE) or polyolefin elastomer (POE) is used as an example, and the solvent is n-pentane (nPN), isopentane (iPN), n-hexane (nHX), a mixture of cyclohexane and n-hexane (HX, the weight percentage of n-hexane is 80%).

Wherein, POE is an ethylene/octene copolymer produced by using (tert-butylamido)dimethyl (1,2,3,4,5-$\eta$)-1,5,6,7-tetrahydro- 2-methylindenylsilane titanium (II) 1,3-pentadiene metal complex (prepared according to USP 5,965,756) and tris(pentafluorophenyl)borane cocatalyst and triisobutylaluminum scavenger with a molar ratio Ti : B : Al of 1 : 3 : 1; POE has a density of 0.868g/cm$^3$, a weight average molecular weight of 130,000, a molecular weight distribution of 2.0, and an ethylene mass fraction of 60-62%.

PBE is a propylene/ethylene copolymer prepared by using dimethylsilyl bis(5,6,7,8-tetrahydro-2,5,5,8,8-pentamethylbenzindenyl)dimethylhafnium (prepared according to US60/586465) and a commercially available triphenylcarbonium tetrakis (pentafluorophenyl)boron compound and triisobutylaluminum scavenger with a molar ratio Hf : B : Al of 1 : 2 : 1, and PBE has a density of 0.87g/cm$^3$, a weight average molecular weight of 120,000, a molecular weight distribution of 2.1, and an ethylene mass fraction of 12-15%.

EPR is an ethylene/propylene copolymer by using bis((2-oxy-3-(dibenzo-1H-pyrrol-1-yl)-5-(methyl)phenyl)-2-phenoxy)-1,3-propanediyl zirconium(IV) dichloride (prepared according to CN102786619B) and a commercially available methylaluminoxane solution with a molar ratio Zr : B : Al of 1 : 2 : 1, and EPR has a density of 0.87 g/cm$^3$, a weight average molecular weight of 120,000, and a molecular weight distribution of 2.1.

Regarding the preparation method of PB, one can refer to Example 1 in CN1093375A, and a polybutadiene rubber with a weight average molecular weight of 390,000 and a molecular weight distribution of 3.8 is obtained.

In the following examples, the amount of glue entering the heating tank with a stirring paddle is 3.1L. The dynamic equipment that provides shear force is a four-blade inclined paddle mixer with a blade inclination angle of 45 degrees and a blade diameter of 0.05m. The heating tank serves as a phase-separation container and uses thermal oil in the jacket to heat up, and its inner diameter is 0.15m.

Example 1.1-17 and Comparative Example I.1-4

The polymer solution was conveyed to a phase-separation heating tank through a gear pump; when the pressure in the phase-separation heating tank was increased to the required pressure, the polymer solution began to be heated up and stirred; when the temperature was higher than 110°C, every time the temperature increased by 5°C by heating, stayed for 10 minutes to observe whether there is a trend of phase separation; and during the heating, kept the pressure constant; started timing when the temperature was heated to the point where phase separation occurred, and calculated the time; and after the phase-separation was completed, samples were taken from the upper and lower parts respectively, and were poured into ethanol of an amount of three times the amount of samples; the precipitated polymer was taken out, baked at 80°C for 24 hours and weighed; and the glue concentration was calculated.

The Reynolds number was obtained as follows:

- the density of the polymer solution was measured as follows: a sample was taken by using a 100ml pressure-resistant steel cylinder and weighed; after weighing, the weight of the empty cylinder was subtracted to get the weight of the polymer solution, which was then divided by the volume of the cylinder to get the density of the polymer solution. The viscosity of the polymer solution under experimental conditions and shear rate were measured on a rotational rheometer HAAKE RS6000 (Thermo Fisher Scientific company, USA).
- Reynolds number Re was calculated by the formula $Re=d^2*N*\rho/\mu$, wherein D is the diameter of the stirrer (m); N is the rotation speed ($s^{-1}$); $\mu$ is the viscosity of the polymer solution before phase-separation (Pa*s); $\rho$ is the density of the polymer solution before phase-separation ($kg/m^3$). The shear force $\tau$ was calculated by the formula $\tau=\mu*Vs$, wherein $\mu$ is the viscosity of the polymer solution before phase-separation (Pa*s); Vs is the shear rate ($s^{-1}$), $Vs=\pi*d*\mu/(1/2*(D-d))$.

In addition, the conditions of the Example are shown in Table 1. The operating steps of the comparative examples were generally similar to the operating steps of the examples, but the stirring was different. The conditions of the comparative examples are also shown in Table 1.

Table I.1

| | Polymer and concentration | Solvent | Shear force kg/(m*s²) | viscosity Pa*s | density kg/m³ | Reynolds number | phase-separation temperature °C | phase-separation pressure MPa | phase-separation time min | stirring speed rpm | polymer concentration in clear phase wt% | polymer concentration in concentrated phase wt% |
|---|---|---|---|---|---|---|---|---|---|---|---|---|
| S1 | POE(12%) | HX | 81.64 | 5.2 | 458 | 1.1 | 200 | 3.5 | 15 | 300 | 0.18 | 26.5 |
| S2 | POE(12%) | nPT | 32.97 | 2.1 | 462 | 2.75 | 140 | 3.5 | 13 | 300 | 0.15 | 26.6 |
| S3 | POE(12%) | iPT | 28.26 | 1.8 | 450 | 3.13 | 120 | 2.3 | 10 | 300 | 0.05 | 27.1 |
| S4 | EPR(12%) | HX | 67.51 | 4.3 | 466 | 1.35 | 200 | 3.5 | 10 | 300 | 0.33 | 27.3 |
| S5 | EPR(12%) | HX | 112.52 | 4.3 | 466 | 2.26 | 200 | 3.5 | 8 | 500 | 0.51 | 26.7 |
| S6 | PBE(12%) | iPT | 16.956 | 1.2 | 452 | 4.24 | 120 | 2.3 | 8 | 270 | 0.08 | 27 |
| S7 | PBE(12%) | nPT | 25.12 | 1.6 | 465 | 3.63 | 140 | 3.5 | 12 | 300 | 0.23 | 26.7 |
| S8 | PB(12%) | HX | 122.46 | 7.8 | 486 | 0.78 | 300 | 3.5 | 17 | 300 | 0.21 | 26.5 |
| S9 | PB(12%) | HX | 81.64 | 7.8 | 486 | 0.52 | 200 | 3.5 | 18 | 200 | 0.4 | 24.8 |
| S10 | POE(15%) | HX | 439.6 | 28 | 473 | 0.21 | 200 | 3.5 | 23 | 300 | 0.33 | 31.3 |
| S11 | POE(20%) | HX | 7222 | 115 | 523 | 0.23 | 200 | 3.5 | 28 | 1200 | 0.52 | 36.1 |
| S12 | EPR(12%) | HX | 225.03 | 4.3 | 466 | 4.52 | 200 | 3.5 | 12 | 1000 | 0.18 | 24.4 |
| S13 | EPR(12%) | HX | 337.55 | 4.3 | 466 | 6.77 | 200 | 3.5 | 18 | 1500 | 0.85 | 22.6 |
| S14 | PBE(12%) | iPT | 18.84 | 1.2 | 452 | 4.71 | 120 | 2.3 | 18 | 300 | 0.08 | 25.4 |
| S15 | PBE(12%) | iPT | 31.40 | 1.2 | 452 | 7.85 | 120 | 2.3 | 18 | 500 | 0.78 | 22.5 |
| S16 | POE(8%) | HX | 4.71 | 0.3 | 424 | 17.67 | 190 | 3.5 | 22 | 300 | 0.15 | 14.8 |
| S17 | POE(8%) | HX | 7.85 | 0.3 | 424 | 29.44 | 190 | 3.5 | 19 | 500 | 0.34 | 14.6 |
| D1 | POE(12%) | HX | 无 | 5.2 | 458 | | 200 | 3.5 | 65 | 0 | 1.08 | 19.1 |
| D2 | POE(15%) | HX | 无 | 28 | 473 | | 200 | 3.5 | 100 | 0 | 1.15 | 23.4 |
| D3 | POE(20%) | HX | 300.92 | 115 | 523 | 0.01 | 200 | 3.5 | 150 | 50 | 3.3 | 28.9 |
| D4 | POE(8%) | HX | 15.7 | 0.3 | 424 | 58.89 | 190 | 3.5 | - | 1000 | - | - |
| Note: In Table I.1, % represents wt%; S1-S17 and D1-4 represent Example I.1-17 and Comparative Example I.1-4 respectively. | | | | | | | | | | | | |

By comparing Example 1.1-17 with Comparative Example 1.1-2, it can be seen that when the Reynolds number is in the range of 0.2-30 and the shear force is in the range of $0.3*\mu^2/(D^2*\rho)<\tau<1000*\mu^2/(D^2*\rho)$, the time of phase-separation of solution is reduced, and the material and energy consumptions of the entire process are significantly reduced, compared with the existing technology that only performs the phase-separation by heat treatment.

By comparing Examples I.1-3 with Comparative Examples I.1 and by comparing Examples with Comparative Examples I.2, it can be seen that when the Reynolds number is in the range of 0.2-30 and the shear force is in the range of $0.3*\mu^2/(D^2*\rho)<\tau<1000*\mu^2/(D^2*\rho)$, not only the time of phase-separation of solution is reduced, but also the material and energy consumptions of the entire process are significantly reduced, and the polymer concentration of the concentrated phase increases, compared with the existing technology that only performs the phase-separation by heat treatment.

By comparing Example I.11 with Comparative Example 1.3, it can be seen that, when the Reynolds number is in the range of 0.2-30 and the shear force is in the range of $0.3*\mu^2/(D^2*\rho)<\tau<1000*\mu^2/(D^2*\rho)$, not only the time of phase-separation of solution is reduced, but the material and energy consumptions of the entire process are significantly reduced, and the concentration of the concentrated phase polymer is increased, compared with the cases wherein the shear force and Reynolds number are not within the above ranges.

By comparing Example I.16 with Comparative Example I.4, it can be seen that the Reynolds number is in the range of 0.2-30, and the shear force is in the range of $0.3*\mu^2/(D^2*\rho)<\tau<1000*\mu^2/(D^2*\rho)$, the polymer solution can phase separate in a relatively short time, while when the shear force and Reynolds number exceed these ranges, the polymer solution was caused to fail to phase separate.

From the above, it can be seen that the method proposed by the invention permits to reduce the temperature of phase-separation and reduce the time of phase-separation during the phase-separation of polymer solution, thereby permits to reduce the energy consumption and steam consumption compared with the existing technology, thus significantly reduce the production costs, and increase the polymer concentration of the concentrated phase.

Example II. 1-12

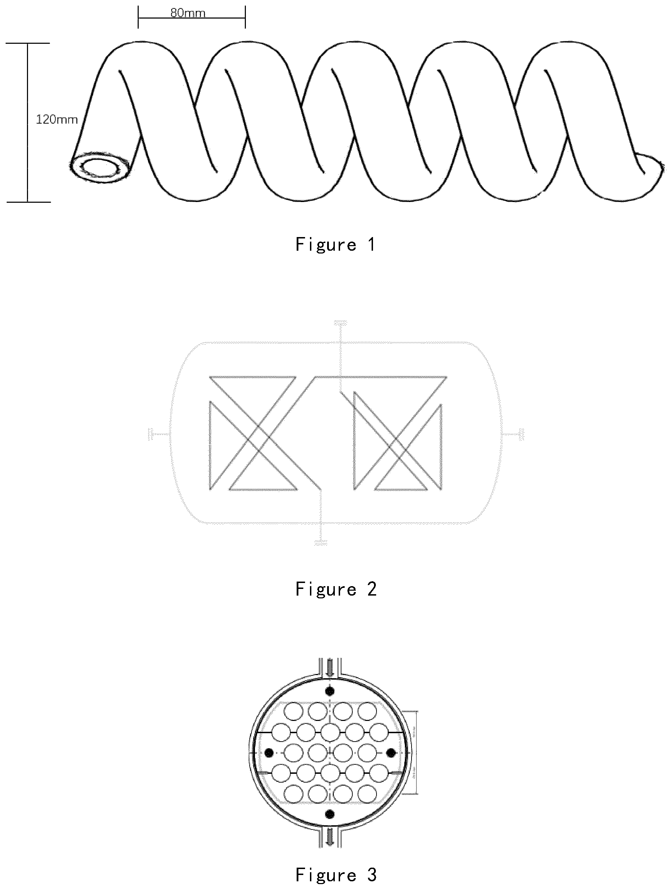

The polymer solution was fed into a spiral coil heat exchanger (the heat exchanger shell size is $\phi$ 159mm*500mm, BEM type, the built-in spiral coil is shown in Figure 1, the total length of the spiral pipe in the heat exchanger is 2m, the pipe diameter is 2mm, and the number of spirals is 5) to conduct heat exchange (wherein the polymer solution passes through the shell side, and the thermal oil passes through the pipe side as the heat medium); after the heat exchange, the polymer solution was sent to the phase-separation tank to perform phase-separation, wherein the polymer and its concentration, the solvent of the polymer solution, the outlet temperature of the heat exchanger, phase-separation conditions, the polymer concentration in clear phase and the polymer concentration in concentrated phase are shown in Table 1.

The Reynolds number was obtained as follows:

- the density of the polymer solution was measured as follows: a sample was taken by using a 100ml pressure-resistant steel cylinder and weighed; after weighing, the weight of the empty cylinder was subtracted to get the weight of the polymer solution, which was then divided by the volume of the cylinder to get the density of the polymer solution. The viscosity of the polymer solution under experimental conditions was measured on a rotational rheometer HAAKE RS6000 (Thermo Fisher Scientific company, USA).
- Reynolds number Re is calculated by the formula $Re=\rho vd/\mu$, wherein d is the characteristic length (m), which refers to the shortest distance in the radial direction when the fluid flows under static perturbation; $\mu$ is the viscosity of the polymer solution before phase-separation (Pa*s); $\rho$ is the density of the polymer solution before phase-separation (kg/m$^3$), v is the flow rate of the polymer solution (m/s).

Example II.13-15

The polymer solution was fed into the Chinese knot heat exchanger (the heat exchanger shell size is $\phi$159mm*500mm, BEM type, the built-in Chinese knot(s) pipeline is shown in Figure 2, the total pipe length in the heat exchanger is 2.7 m, the pipe was bend and fold into 2 Chinese knots in Chinese knot manner in the shell, the angle of the pipe at the bend is 45 degrees or 135 degrees, the pipe diameter is 2mm) to conduct heat exchange (wherein the polymer solution passes through the shell side, and the thermal oil passes through the pipe side as the heat medium), after the heat exchange, the polymer solution was sent to the phase-separation tank to perform phase-separation. Wherein the polymer and its concentration, the solvent of the polymer solution, the outlet temperature of the heat exchanger, the phase-separation conditions, the polymer concentration in clear phase and the polymer concentration in concentrated phase are shown in Table 1.

Example II.16-17

These examples were carried out according to the protocol of Example II.1, except that the heat exchanger shell size of the spiral coil heat exchanger was φ159mm* 800mm, BEM type, the total length of the spiral pipe in the heat exchanger was 4m, the pipe diameter was 2mm and the number of spirals was 10. The polymer and its concentration, the solvent of the polymer solution, the outlet temperature of the heat exchanger, phase-separation conditions, the polymer concentration in clear phase and the polymer concentration in concentrated phase are shown in Table 1.

Example II.18-19

These Examples were carried out according to the protocol of Example II.13, except that the heat exchanger shell size of the Chinese knot heat exchanger was φ159mm* 800mm, BEM type, with built-in Chinese knot(s) pipeline, the total pipe length in the heat exchanger was 4.2 m, the pipe was bend and fold into 3 Chinese knots in Chinese knot manner inside the shell; wherein the angle of the pipe at the bend was 45 degrees or 135 degrees, and the pipe diameter is 2 mm. The polymer and its concentration, the solvent of the polymer solution, the outlet temperature of the heat exchanger, phase-separation conditions, the polymer concentration in clear phase and the polymer concentration in concentrated phase are shown in Table 1.

In the above examples, the method for measuring the time of phase-separation was as follows:

The measurement methods of polymer concentration and of phase-separation time were as follows: started timing when entering the phase separation tank, calculated the time; after the phase-separation was completed, samples were taken from the upper and lower parts respectively, poured into ethanol of an amount of three times the amount of samples, and the precipitated polymer was taken out, baked at 80°C for 24 hours, weighed; and the glue concentration was calculated.

Table II. 1

| Example | Polymer and concentration | Solvent | Characteristic length d/m | density kg/m3 | viscosity Pa*s | flow rate v(m/s) | Reynolds number Re=$\rho$vd/$\mu$ | outlet temperature °C | Phase-separation temperature °C | Phase-separation pressure MPa | Phase-separation time min | polymer concentration in clear phase wt% | polymer concentration in concentrated phase wt% |
|---|---|---|---|---|---|---|---|---|---|---|---|---|---|
| SII.1 | POE(8%) | HX | 0.0195 | 416 | 0.3 | 0.64 | 17.31 | 195 | 195 | 3.5 | 17 | 0.15 | 18.8 |
| SII.2 | POE(12%) | HX | 0.0195 | 462 | 5.8 | 0.64 | 0.99 | 195 | 195 | 3.5 | 23 | 0.46 | 25.6 |
| SII.3 | POE(15%) | HX | 0.0195 | 472 | 29 | 0.64 | 0.20 | 200 | 200 | 3.5 | 33 | 0.41 | 30.2 |
| SII.4 | POE(12%) | nPT | 0.0195 | 455 | 1.7 | 0.64 | 3.34 | 145 | 145 | 3.5 | 18 | 0.28 | 26.2 |
| SII.5 | POE(12%) | iPT | 0.0195 | 451 | 1.7 | 0.64 | 3.31 | 120 | 120 | 2.3 | 16 | 0.25 | 27.4 |
| SII.6 | PBE(10%) | nPT | 0.0195 | 445 | 1.2 | 0.64 | 4.63 | 145 | 145 | 3.5 | 10 | 0.33 | 20.9 |
| SII.7 | PBE(10%) | iPT | 0.0195 | 432 | 0.8 | 0.64 | 6.74 | 120 | 120 | 2.3 | 8 | 0.21 | 21.45 |
| SII.8 | PB(10%) | HX | 0.0195 | 463 | 5.8 | 0.43 | 0.67 | 190 | 190 | 3.5 | 18 | 0.54 | 18.2 |
| SII.9 | PB(10%) | HX | 0.0195 | 454 | 4.6 | 0.43 | 0.83 | 195 | 195 | 3.5 | 14 | 0.32 | 21.9 |
| SII.10 | PB(10%) | HX | 0.0195 | 443 | 4.1 | 0.43 | 0.91 | 200 | 200 | 3.5 | 15 | 0.34 | 21.4 |
| SII.11 | EPR(7%) | HX | 0.0195 | 423 | 0.5 | 0.64 | 10.56 | 195 | 195 | 3.5 | 6 | 0.55 | 15.3 |
| SII.12 | EPR(12%) | HX | 0.0195 | 465 | 4.2 | 1.07 | 2.31 | 195 | 195 | 3.5 | 17 | 0.58 | 25.2 |
| SII.13 | POE(8%) | HX | 0.02 | 416 | 0.3 | 1.05 | 29.12 | 195 | 195 | 3.5 | 12 | 0.10 | 18.9 |
| SII.14 | POE(12%) | HX | 0.02 | 462 | 5.8 | 1.05 | 1.67 | 195 | 195 | 3.5 | 18 | 0.33 | 26.1 |
| SII.15 | POE(15%) | HX | 0.02 | 472 | 29 | 1.05 | 0.34 | 200 | 200 | 3.5 | 22 | 0.35 | 30.0 |
| SII.16 | POE(8%) | HX | 0.02 | 416 | 0.3 | 0.5 | 13.87 | 195 | 195 | 3.5 | 8 | 0.11 | 19.1 |
| SII.17 | POE(12%) | HX | 0.02 | 462 | 5.8 | 0.5 | 0.80 | 195 | 195 | 3.5 | 17 | 0.23 | 27.1 |
| SII.18 | POE(8%) | HX | 0.02 | 416 | 0.3 | 0.85 | 23.57 | 195 | 195 | 3.5 | 10 | 0.10 | 19.3 |
| SII.19 | POE(12%) | HX | 0.02 | 462 | 5.8 | 0.85 | 1.35 | 195 | 195 | 3.5 | 19 | 0.27 | 27.5 |

Note: In Table II.1, % represents wt%; SII.1-SII.19 represents Example II.1-19 respectively.

From Example II.1-15, it can be seen that the temperature of phase-separation of solution is reduced and the time of phase-separation of solution is within 35 minutes, which can effectively avoid the residence time of the polymer at high temperature before the catalyst is inactivated. It can be seen from Examples II. 16-17 that increasing the length of the spiral pipe and the number of spirals can further shorten the time of phase-separation and increase the polymer concentration in the concentrated phase. It can be seen from Examples II.1 8-19 that increasing the total pipe length and the number of Chinese knots can further shorten the time of phase-separation and increase the polymer concentration in the concentrated phase.

Example II. 20-25

The polymer solution was fed into the tubular heat exchanger (the heat exchanger shell size was φ159mm*500mm, BEM type, the built-in pipe arrangement was shown in Figure 3, and the pipe in the heat exchanger was arranged in one pass, each pipe was 500mm long and 20mm in diameter) to perform heat exchange(wherein the polymer solution passes through the pipe side and the thermal oil passes through the shell side as the heat medium); after heat exchange, the polymer solution was then sent to the phase separation tank to conduct phase separation through a pipe with 5 pairs of baffles (4.5mm*3mm) symmetrically installed inside, wherein the polymer and its concentration, the solvent of the polymer solution, the outlet temperature of the heat exchanger, phase-separation conditions, the polymer concentration in clear phase and the polymer concentration in concentrated phase are shown in Table II.2.
Reynolds number Re was obtained in the same manner as in Example II. 1-19.

Table II.2

| Example | Polymer and concentration | Solvent | Characteristic length | density | viscosity | flow rate | Reynolds number | outlet temperature | Phase-separation pressure | Phase-separation time | polymer concentration in clear phase | polymer concentration in concentrated phase |
|---|---|---|---|---|---|---|---|---|---|---|---|---|
| | | | d/m | kg/m³ | Pa*s | v(m/s) | Re=$\rho vd/\mu$ | °C | Mpa | min | wt% | wt% |
| S20 | POE(8%) | HX | 0.016 | 416 | 0.3 | 1.2 | 26.62 | 195 | 3.5 | 21 | 0.33 | 17.9 |
| S21 | POE(12%) | HX | 0.016 | 462 | 5.8 | 1.2 | 1.53 | 195 | 3.5 | 25 | 0.25 | 26.7 |
| S22 | POE(15%) | HX | 0.016 | 472 | 29 | 1.2 | 0.31 | 200 | 3.5 | 42 | 0.31 | 30.5 |
| S23 | POE(12%) | HX | 0.016 | 462 | 5.8 | 0.7 | 0.89 | 195 | 3.5 | 28 | 0.46 | 25.1 |
| S24 | POE(12%) | HX | 0.016 | 462 | 5.8 | 1.7 | 2.17 | 195 | 3.5 | 22 | 0.23 | 26.8 |
| S25 | POE(12%) | HX | 0.016 | 462 | 5.8 | 2.3 | 2.93 | 195 | 3.5 | 26 | 0.26 | 26.6 |

Note: In Table II.2, % represents wt%; S20-S25 represents Example II.20-25 respectively.

It can be seen from Example II.20-25 that the time of phase-separation of solution is within 45 minutes, thereby reducing the residence time of the polymer at high temperature.

The preferred embodiments of the invention have been described in detail above; however, the invention is not limited to the specific details of the above embodiments. Within the scope of the technical concept of the invention, various simple modifications can be made to the technical solution of the invention, and these simple modifications all belong to the protection scope of the invention.

In addition, it should be noted that each of the specific technical features described in the above-mentioned specific embodiments can be combined in any suitable manner unless there is any contradiction. In order to avoid unnecessary repetition, various possible combinations are not further described in the description. In addition, any combinations of various embodiments of the invention are also possible, as long as they do not violate the idea of the invention, and they should also be regarded as the disclosed content of the invention.

**Claims**

1. A method for promoting phase-separation of a polymer solution, comprising: in a phase-separation device that performs liquid-liquid phase-separation of a polymer solution into a clear liquid phase and a concentrated liquid phase, disturbance is applied to the polymer solution so that the Reynolds number anywhere in the polymer solution except the boundary layer is greater than 0.2 and less than critical Reynolds value, where the critical Reynolds value is in range of 1-30.

2. The method according to claim 1, wherein the disturbance is applied to the polymer solution so that the Reynolds number anywhere in the polymer solution is greater than 0.5, or greater than 1; and/or the critical Reynolds value is less than or equal to 20, or is less than or equal to 10, and the critical Reynolds value is greater than or equal to 2.5, or greater than or equal to 3, or greater than or equal to 4.5.

3. The method according to claim 1, wherein thermal disturbance is applied to the polymer solution by heat treatment, and/or mechanical perturbation is applied to the polymer solution by mechanical means.

4. A method according to any one of the preceding claims, wherein the disturbance is applied in the phase-separation device, the disturbance is applied before the polymer solution enters the phase-separation device, and/or the disturbance is applied during the feeding of the polymer solution into the phase-separation device.

5. The method according to any one of the preceding claims, wherein no pressure reduction step is included before the polymer solution enters the phase separation device, and the polymer solution does not experience significant pressure reduction in the phase separation device, for example, the pressure of the polymer solution in the phase-separation device does not decrease or decreases by no more than 20%, preferably no more than 10%; for example, the pressure of the polymer solution in the phase separation device in a steady state is reduced by no more than 20% compared to the pressure at the outlet of the reactor used for the polymerization reaction of the polymer solution.

6. The method according to any one of the preceding claims, wherein the thermal disturbance is applied to the polymer solution by heat treatment, the temperature of heat treatment is within the range of the lower critical solution temperature of the polymer solution $\pm 50°C$, and the pressure of heat treatment is 10-50 bar;
preferably, the heat treatment causes the temperature of the polymer solution in the phase-separation device to be 100-300°C, preferably 110-250°C, more preferably 120-200°C.

7. The method according to any one of the preceding claims, wherein the mechanical perturbation is applied by subjecting a portion or all of the polymer solution to a shear force $\tau$, wherein the shear force $\tau$ satisfies the following formula,

$$5*\mu^2/(D^2*\rho)<\tau<1000*\mu^2/(D^2*\rho) \text{ (I)}$$

wherein, $\mu$ is the viscosity of the polymer solution before phase-separation, in Pa*s,
D is the hydraulic diameter, in m,
$\rho$ is the density of the polymer solution before phase-separation, in kg/m$^3$;
preferably, $\tau$ satisfies the following formula:

$$20*\mu^2/(D^2*\rho)<\tau<120*\mu^2/(D^2*\rho)\ \text{(II)}.$$

8. The method according to claim 7, wherein the mechanical perturbation is applied by stirring.

9. The method according to claim 8, wherein one or more internal components for enhancing disturbance are provided in the phase separation device.

10. The method according to claim 9, wherein the internal components for enhancing disturbance are baffles and/or guide tube.

11. The method according to claim 6, wherein the mechanical perturbation is implemented during or after the heat treatment.

12. The method according to claim 11, wherein the disturbance is applied in one or more of the following ways:

performing the heat treatment before phase-separation device, and applying one or more mechanical perturbations selected from: applying mechanical perturbation in the heat treatment device before the phase-separation device, applying the mechanical perturbation in the pipe conveying the polymer solution to the phase-separation device, applying the mechanical perturbation during the feeding of the polymer solution into the phase-separation device, and applying the mechanical perturbation in said phase-separation device; and performing the heat treatment in phase-separation device and applying the mechanical perturbation in the phase-separation device.

13. The method according to claim 12, wherein the disturbance is applied in one or more of the following ways:

(1) performing the heat treatment before phase-separation device, and applying the mechanical perturbation in the pipe that conveys the polymer solution to the phase-separation device;
(2) performing the heat treatment before phase-separation device, and applying the mechanical perturbation during the feeding of the polymer solution into the phase-separation device;
(3) performing the heat treatment before phase-separation device, and applying the mechanical perturbation in the phase-separation device;
(4) performing the heat treatment before phase-separation device, applying the mechanical perturbation during the feeding of the polymer solution into the phase-separation device, and applying the mechanical perturbation in the phase-separation device;
(5) performing the heat treatment before phase-separation device, and applying the mechanical perturbation in the equipment performing the heat treatment before phase-separation device.

14. The method according to claim 12 or 13, wherein the heat treatment before phase-separation device is performed by a heat exchanger, and/or is performed by applying jacket-heating to the pipe connected to the phase-separation device.

15. The method according to claim 12 or 13, wherein applying the mechanical perturbation during the feeding of the polymer solution into the phase separation device is performed by feeding the polymer solution through a nozzle or distributor.

16. The method according to claim 12 or 13, wherein the heat treatment in phase-separation device is performed by jacket heating and/or built-in heating coils.

17. The method according to claim 12 or 13, wherein applying the mechanical perturbation in the phase-separation device is performed by imposing stirring, setting baffles or other fixed components.

18. The method according to claim 12 or 13, wherein the mechanical perturbation is applied by arranging components such as coils/Chinese knot(s) in the device for performing heat treatment before phase-separation device.

19. The method according to claim 12 or 13, wherein the polymer solution is conveyed to a heat exchanger with a heating function and capable of disturbing the flowing of the polymer solution to perform the heating treatment, and then is sent to a phase-separation device to perform phase-separation.

**20.** The method according to claim 19, wherein protrusions capable of disturbing the liquid flow are provided in the pipe of the polymer solution flow path upstream of the phase-separation device.

**21.** The method according to claim 18, wherein protrusions capable of disturbing liquid flow are provided in the pipe of the polymer solution flow path in the heat exchanger.

**22.** The method according to claim 19 or 20, wherein the heat exchanger is a Chinese knot heat exchanger and/or a spiral coil heat exchanger;

preferably, the inner pipe of the Chinese knot heat exchanger is bent and folded to form multiple Chinese knots, more preferably 1 to 5 Chinese knots;
preferably, the pipe in the spiral coil heat exchanger is bent in a spiral manner to form multiple spirals, more preferably 3 to 20 spirals.

**23.** The method according to any one of the preceding claims, wherein the polymer solution is a polymer solution obtained by a solution polymerization process, and the polymer concentration in the polymer solution is 5-20wt%, preferably 6-15wt%.

**24.** The method according to any one of the preceding claims, wherein the polymer in the polymer solution is selected from one or more of plastic, rubber and thermoplastic elastomer;

preferably, the plastic is selected from one or more of polyethylene, polypropylene, polybutylene, copolymers of ethylene and one or more $\alpha$-olefins, and copolymers of propylene and one or more $\alpha$-olefins;
preferably, the rubber is selected from one or more of butadiene-styrene rubber, butadiene rubber, isoprene rubber and styrene-isoprene rubber;
preferably, the thermoplastic elastomer is selected from one or more of copolymers of ethylene and one or more $\alpha$-olefins, copolymers of propylene and one or more $\alpha$-olefins, and copolymers of ethylene and one or more cyclic olefins, copolymers of ethylene and alpha-olefins with one or more cyclic olefins, copolymers of ethylene and alpha-olefins with optionally non-conjugated dienes, butene-ethylene copolymers, styrene-butadiene-styrene block copolymers and hydrogenated styrene-butadiene-styrene block copolymers.

**25.** The method according to any one of the preceding claims, wherein the solvent in the polymer solution is selected from one or more of C5-C10 linear or branched alkanes, C5-C10 cycloalkanes and C6-C20 aromatic hydrocarbons; preferably, the solvent in the polymer solution is selected from one or more of n-pentane, isopentane, cyclopentane, n-hexane, isohexane, cyclohexane, methylcyclohexane, n-heptane, 2-methylheptane, n-octane, isooctane, mixed octane, benzene, toluene, o-xylene, m-xylene and p-xylene.

**26.** The method according to any one of the preceding claims, wherein the polymer concentration in the clear liquid phase is less than 1 wt%, and the polymer concentration in the concentrated liquid phase is 8-50 wt%, preferably 10-35wt%, more preferably 15-31wt%.

**27.** The method according to claim 26, wherein the polymer concentration in the concentrated liquid phase is more than 1.35 times, more preferably more than 1.8 times, and further preferably more than 2.0 times the polymer concentration in the polymer solution.

**28.** A phase-separation method of polymer solution, including the following steps:

1) a step of using the method according to any one of claims 1 to 27 to promote the phase-separation of the polymer solution;
2) a step of separating the clear liquid phase from the concentrated liquid phase.

**29.** A preparation method of olefin polymers, comprising the following steps:

(A) a catalyst system is fed into the polymerization reactor and contacted with one or more olefin monomers and optionally hydrogen to perform olefin polymerization and to obtain a polymerization reaction mixture;
(B) the phase-separation of the polymerization reaction mixture of step A is performed by the phase-separation method of polymer solution according to claim 28 to obtain a clear liquid phase and a concentrated liquid phase.

30. The preparation method according to claim 29, **characterized in that** the method further includes a following step: the concentrated liquid phase is recovered from the phase-separation solution obtained in step B, and the concentrated liquid phase is devolatilized to obtain the polymer.

Figure 1

Figure 2

Figure 3

## INTERNATIONAL SEARCH REPORT

International application No.

**PCT/CN2022/127181**

| A. | CLASSIFICATION OF SUBJECT MATTER |
| --- | --- |

C08F 6/04(2006.01)i; C08F 6/06(2006.01)i; B01D 17/00(2006.01)i

According to International Patent Classification (IPC) or to both national classification and IPC

| B. | FIELDS SEARCHED |
| --- | --- |

Minimum documentation searched (classification system followed by classification symbols)

C08F, B01D

Documentation searched other than minimum documentation to the extent that such documents are included in the fields searched

Electronic data base consulted during the international search (name of data base and, where practicable, search terms used)

CNKI, STN, CNABS, CNTXT, DWPI, VEN, VCN: 相分离, 溶液, 雷诺, 临界, phase separation, solution, Reynolds number, Critical Reynolds number,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2009242490 A1 (CAMERON INTTERNATIONAL CORP.) 01 October 2009 (2009-10-01) see description, pages 1-2 | 1-30 |
| A | GB 1148809 A (E. I. DU PONT DE NEMOURS AND COMPANY) 16 April 1969 (1969-04-16) see description, pages 1-2 | 1-30 |
| A | US 2005197487 A1 (ASAHI GLASS CO., LTD.) 08 September 2005 (2005-09-08) see description, pages 1-2 | 1-30 |
| A | US 5306807 A (GENERAL ELECTRIC COMPANY) 26 April 1994 (1994-04-26) see description, columns 2-3 | 1-30 |
| A | EP 0149342 A2 (EXXON RESEARCH ENGINEERING CO.) 24 July 1985 (1985-07-24) see description, pages 3-7 | 1-30 |
| A | CN 1622960 A (ANTON WOLF BERNHARD) 01 June 2005 (2005-06-01) see description, pages 2-4 | 1-30 |
| A | GB 966756 A (HOECHST AKTIENGESELLSCHAFT) 12 August 1964 (1964-08-12) see description, pages 1-2 | 1-30 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 January 2023** | **20 January 2023** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><th colspan="2">INTERNATIONAL SEARCH REPORT<br>Information on patent family members</th><th>International application No.<br><br>PCT/CN2022/127181</th></tr>
</table>

| Patent document cited in search report | | | Publication date (day/month/year) | Patent family member(s) | | | Publication date (day/month/year) |
|---|---|---|---|---|---|---|---|
| US | 2009242490 | A1 | 01 October 2009 | GB | 201005900 | D0 | 26 May 2010 |
| | | | | US | 2013327726 | A1 | 12 December 2013 |
| | | | | GB | 201005896 | D0 | 26 May 2010 |
| | | | | BR | PI0712784 | A2 | 02 April 2013 |
| | | | | NO | 20083875 | A | 12 November 2008 |
| | | | | GB | 201005897 | D0 | 26 May 2010 |
| | | | | US | 2013001170 | A1 | 03 January 2013 |
| | | | | GB | 0816320 | D0 | 15 October 2008 |
| | | | | WO | 2007096612 | A2 | 30 August 2007 |
| | | | | GB | 0603811 | D0 | 05 April 2006 |
| GB | 1148809 | A | 16 April 1969 | DE | 1745295 | A1 | 06 April 1972 |
| | | | | US | 3553156 | A | 05 January 1971 |
| | | | | NL | 6717025 | A | 17 June 1968 |
| US | 2005197487 | A1 | 08 September 2005 | EP | 1535933 | A1 | 01 June 2005 |
| | | | | WO | 2004009653 | A1 | 29 January 2004 |
| | | | | KR | 20050030203 | A | 29 March 2005 |
| | | | | CN | 1671751 | A | 21 September 2005 |
| | | | | JP | WO2004009653 | A1 | 17 November 2005 |
| | | | | AU | 2003252247 | A1 | 09 February 2004 |
| US | 5306807 | A | 26 April 1994 | DE | 69417644 | D1 | 12 May 1999 |
| | | | | JP | H07165929 | A | 27 June 1995 |
| | | | | EP | 0636643 | A1 | 01 February 1995 |
| EP | 0149342 | A2 | 24 July 1985 | AU | 3708884 | A | 04 July 1985 |
| | | | | JP | S60179403 | A | 13 September 1985 |
| | | | | CA | 1252598 | A | 11 April 1989 |
| | | | | DE | 3481309 | D1 | 15 March 1990 |
| CN | 1622960 | A | 01 June 2005 | NZ | 533873 | A | 24 February 2006 |
| | | | | CA | 2472375 | A1 | 31 July 2003 |
| | | | | DE | 10202591 | A1 | 31 July 2003 |
| | | | | NO | 20043500 | L | 23 August 2004 |
| | | | | JP | 2005515275 | A | 26 May 2005 |
| | | | | AU | 2003206777 | B2 | 29 March 2007 |
| | | | | DE | 60314370 | D1 | 26 July 2007 |
| | | | | AT | 364638 | T | 15 July 2007 |
| | | | | EP | 1468026 | A1 | 20 October 2004 |
| | | | | US | 2005051484 | A1 | 10 March 2005 |
| | | | | RU | 2004125656 | A | 27 May 2005 |
| | | | | WO | 03062282 | A1 | 31 July 2003 |
| GB | 966756 | A | 12 August 1964 | DE | 1420447 | A1 | 28 November 1968 |
| | | | | CH | 424265 | A | 15 November 1966 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107614541 A
- US 5965756 A
- US 60586465 B
- CN 102786619 B
- CN 1093375 A

**Non-patent literature cited in the description**

- **WU QI.** Macromolecular Solution. Higher Education Press, 2021, 424-431